# EUROPEAN PATENT APPLICATION

(11) **EP 0 816 068 A1**
(43) Date of publication of application: **07.01.1998**
(21) Application number: 97304410.0
(22) Date of filing: 24.06.1997
(51) Int. Cl.: B32B 27/18, B32B 27/32, B65D 65/40

(54) **Heat shrinkable packaging film with improved hot slip properties**

(30) Priority: 25.06.1996 US 20393 P
(71) Applicant: Intertape Polymer Group, Truro, Nova Scotia B2N 5G8 (CA)
(72) Inventor: Iaboni, Silvano, Truro, Nova Scotia B2N 1B9 (CA); Hopkins, Thomas E., Greenville, S.C. 29616-0176 (US)
(74) Representative: Howden, Christopher Andrew

(57) **Abstract**

A polyolefin heat shrinkable film comprising opposed surface layers, in which at least one of the surface layers contains slip additive and in which the slip properties of the film are formed immediately on extrusion of said film. Preferably, the at least one surface layer thereof is formed from a composition of polyolefin and a micro-dispersion of an ultra-high molecular weight silicone polymer.

## Description

### Field of the Invention

The present invention relates to a transparent heat shrinkable packaging film with an improved coefficient of friction, at hot, ambient and cold temperatures, to other substrates such as metal, corrugated cardboard and the film itself.

### Background to the Invention

The packaging of articles in a packaging film is widely used in the packaging industry for a variety of reasons, including protection of the articles and prevention of damage or theft. One particular aspect of the packaging industry relates to packaging of articles in shrink film, in which the article is wrapped in film after which the film is heated to shrink the film to form a tight wrapping.

In a typical shrink wrapping process, a heat shrinkable packaging film is wrapped around the article to be packaged, and heat sealed or static sealed to completely enclose the article. The article is then placed on a conveyor which passes the article through a tunnel. While in the tunnel, hot air is impinged on the film to shrink the film into a tight fitting skin around the enclosed article.

Typical air temperatures within the tunnel may range from 320°-395°F (160-201°C). The film of the wrapped article that exits the shrink tunnel retains residual heat from exposure to the hot air during the shrinking process in the tunnel. In the case of an automatic packaging operation, wrapped articles can exit the heat shrink tunnel at speeds up to 95 per minute. These articles are often collated into stacks and then inserted into a corrugated carton for shipping.

If the heat shrinkable film has poor hot film to film slip properties, it is difficult to accumulate the packaged articles into a neat pile, because one packaged article will not readily slide past the adjacent article. Moreover, although the first stacks of packaged articles may slide into the shipping carton quite easily, the last stack or article must be inserted into a nearly fully packed carton. This requires good film to film slip and film to corrugated cardboard slip since the last stack or article must slide past previously packed and wrapped articles and the inside surface of the corrugated shipping carton.

Manufacturers of shrink films typically add slip additives to the resins used to produce the films during the extrusion process to improve film to film and film to metal slip and to facilitate winding the film into rolls during the manufacturing process. Erucamide and stearamide are two commonly used slip additives in shrink film production. These additives are relatively volatile materials. Although they do improve the film to film slip performance, they affect the optical properties of the film in an adverse manner. In order to be effective slip agents, the additive (erucamide or stearamide) must be present on the film surface. The manufacturer must achieve a balance with respect to the amount of erucamide or stearamide required on the film surface to create good film to film slip and the amount at which the haze and surface gloss of the film are degraded.

The relative high volatility of these materials causes a portion of the slip agent added to the resin to be volatized and lost during the melt extrusion process. A further deficiency occurs after the film has been formed and wound into a roll at the end of the film manufacturing process. Erucamide and stearamide require a blooming period to diffuse through the polymer matrix of the resin or resins used to produce the film to reach the film surface. The time required for migration of the slip additives to the film surface is dependent on a number of factors including film thickness, ambient temperature and film tension during the winding process. In any event, the film must be retained for an indeterminate period of time to allow the slip additive to migrate to the film surface before final film slip and optical properties are reached, which is referred to in the trade as the blooming period.

For critical hot slip packaging applications, the slip level obtained with erucamide and stearamide additive is not sufficient. For such applications, a silicone coating is applied to the external film surface or surfaces. These coatings improve the hot film to film slip performance of the film compared to uncoated films but also produce other product deficiencies. For instance, manufacturers of silicone-coated films state that these films are not printable and with the exception of thin films (0.5 to 0.6 mils thick) cannot be static sealed effectively. Further, the silicone coating deposits on the forming surfaces and on sealing knives and wires on the packaging machines on which these films are used. The machine must be shut down periodically to clean the silicone coating deposits from these surfaces, interrupting the packaging process.

### Summary of the Invention

A shrink wrap packaging film that overcomes many of the above deficiencies has now been found.

Accordingly, one aspect of the invention provides a polyolefin heat shrinkable film comprising opposed surface layers, in which at least one of said surface layers contains slip additive and in which the slip properties of the film are formed on extrusion of said film; especially immediately on extrusion.

Another aspect of the present invention provides a process for the manufacture of a polyolefin heat shrinkable film comprising opposed surface layers, in which at least one of said surface layers contains slip additive, said process comprising co-extruding said surface layers through an annular extrusion die, biaxially orienting the film so extruded and cooling said film.

A further aspect of the present invention provides a process for the manufacture of a polyolefin heat shrinkable film comprising opposed surface layers, in which at least one of said surface layers contains slip additive, said process comprising co-extruding said surface layers through an annular extrusion die, biaxially orienting the film so extruded and cooling said film.

### Detailed Description of the Invention

The present invention relates to heat shrinkable films. Such films may be monolayer films or multi-layer films, the latter typically have a core layer interposed between opposed surface (skin) layers. The core layer may be a single layer or it may itself be a multiple layer. Thus a heat shrinkable packaging film is typically at least three layers, but may have five or more layers.

The core layer that is used, if present, depends on the properties required for the heat shrinkable packaging film. The surface (skin) layers may be the same or different in the heat shrinkable packaging film.

A variety of polymers may be used to form the core and skin layers, including low density polyethylene (LDPE), linear low density polyethylene (LLDPE), high density polyethylene (HDPE), very low density polyethylene (VLDPE), metallocene polyethylene, homopolymer polypropylene, copolymer polypropylene, metallocene ethylene/propylene copolymers, ethylene/vinyl acetate copolymers (EVA), ethylene/methyl acrylate copolymers (EMA), and other ethylene copolymers, and blends of the above polymers. LLDPE and ethylene/propylene copolymers are the polymers used most frequently.

Heat shrinkable packaging films typically have a thickness of less than 2 mil, preferably less than 1.5 mil and especially less than 1.0 mil.

Multi-layer heat shrinkable packaging films may be manufactured using a coextrusion process in which the surface layers are coextruded with the core layer. In a coextrusion process, the layers of polymer are extruded through an annular coextrusion die, forming a tube of the coextruded molten film. The tube is extended while the film is still molten or in a softened state, or cooled and reheated prior to being extended, such extension being effected by inflating the tube by air or gas under pressure and by drawing the tube from the die at a rate in excess of the extrusion rate and, using combinations of speed of withdrawal of the film from the extrusion die and the size of the bubble formed by inflation of the tube, the film is biaxially oriented. The film is then cooled and wound into rolls, although it could be fed directly to a subsequent stage, e.g. a slitting operation.

In preferred processes for manufacture of a film in accordance with the present invention a slip additive in the form of a pelletized micro-dispersion of an ultra-high molecular weight silicone polymer in a thermoplastic carrier is mixed with a pelletized polyolefin destined to form a matrix material and the mixture melted and blended, for example in the screw/feed chamber of an extruder. The resulting blend of matrix polymer with the thermoplastic carrier and silicone polymer dispersion is fed to a co-extrusion nozzle to form a surface layer of the co-extruded product. Alternatively, the molten thermoplastics carrier incorporating such micro-dispersion of silicone polymer may be fed directly into molten matrix polymer to be blended therewith upstream of the co-extrusion nozzle. As a further possibility, the silicone polymer in concentrated form may be mixed in pelletized form with the pelletized matrix polymer at the infeed to the extruder, or may be supplied in molten form to the respective extruder screw chamber to be dispersed in the molten matrix polyolefin in the respective screw chamber prior to extrusion. The silicone polymer may thus be fed directly into the molten polymer in the form of a concentrate or as the silicone polymer per se. The concentration of the silicone polymer in the skin layer or layers, or throughout the film if the film is a monolayer film, is preferably up to 10% silicone by weight, preferably less than 5% by weight and especially preferably less than 2.5% by weight. An example of the slip additive which may be used, and which is supplied as a pelletized polypropylene carrier incorporating a micro-dispersion of ultra-high molecular weight silicone polymer is Dow Corning masterbatch MB50-001.

As exemplified below, use of such a pelletized micro-dispersion of ultra-high molecular weight silicone polymer in a polypropylene carrier, dry blended as a slip masterbatch with thermoplastic resins, in heat shrink packaging film manufacture showed dramatic functional improvements in the film to film slip performance of these films. Furthermore, the slip properties are obtained immediately after the film is produced. Thus, the blooming period necessary for films containing erucamide and stearamide is not required with the films of the present invention.

It is to be understood that the heat shrinkable films may be subjected to a number of processing steps after manufacture, including perforation, treatment with a corona discharge and/or with irradiation, as is known for heat shrinkable films. The film may also contain additives including conventional slip and anti-block additives.

It is believed that it is now possible to produce a monolayer or multilayer film which meets the requirement for applications requiring a heat shrink packaging film with exceptional slip properties and one which will static seal effectively and/or be printed. In particular, it is believed that an un-coated multi-layer heat shrinkable packaging film can now be produced that is usable in the form of a thin film e.g. 0.6 to 0.7 mils thick. A very important functional improvement of the present invention over the use of silicone coatings is the reduction or elimination of a build up of deposits on the shrink equipment during the processing of the film.

The present invention is illustrated by the following examples.

### Example 1

A three layer biaxially oriented tubular film was prepared by the general process described on pages 23 and 24 of Chapter 3 of Plastic Films for Packaging by Calvin J. Benning, published in 1983 by the Technomic Publishing Company. The three layer film of this example included a linear low density polyethylene core (LLDPE) encapsulated between two surface layers of an ethylene-propylene copolymer. 5% by weight Dow Corning masterbatch MB50-001, which contains 50% by weight of ultra high molecular weight silicone polymer in the form of a microdispersion, was dry blended with the surface layer ethylene-propylene copolymer resin prior to extrusion.

These polymers were coextruded to form a three layer tube which was quenched, reheated and then simultaneously pneumatically blown and stretched in the machine direction to create a biaxially oriented multi-layer heat shrinkable film.

Shrink film made according to this procedure and with these materials was then compared with prior art shrink film made using the same process and materials but without the Dow Corning masterbatch MB50-001.

These films were tested on a Thwing-Albert friction tester using ASTM procedure D1874-90 to determine the static and kinetic coefficients. The results of this testing are summarized in the following table:

| | | Film to Film Coefficient of Friction | | | |
|---|---|---|---|---|---|
| Film Temperatures | COF Tester Sled Weight (grams) | Film made with MB50-001 | | Film made without MB50-001 | |
| | | static | kinetic | static | kinetic |
| ambient | 200 | 0.188 | 0.142 | 0.275 | 0.240 |
| ambient | 1,000 | 0.199 | 0.142 | 0.256 | 0.223 |
| 100°F | 200 | 0.435 | 0.339 | stuck | stuck |
| 100°F | 1,000 | 0.482 | 0.413 | stuck | stuck |

These results show the dramatic improvement in slip performance for heat shrinkable films incorporating ultra-high molecular weight silicone polymer in the film surface layer compared to a similar heat shrinkable film which does not include this additive. There is a major difference in the hot or 100°F slip performance between these films. It will be noted that there was no film to film slip for films which do not include the ultra-high molecular weight silicone polymer in the surface layers. In contrast, those films which do include this slip additive exhibit good film to film slip at this temperature.

The features disclosed in the foregoing description, and in the following claims may, both separately and in any combination thereof, be material for realising the invention in diverse forms thereof.

## Claims

1. A heat-shrinkable polyolefin film in which at least one surface of the film is provided by polyolefin in which is dispersed a silicone polymer, or by a blend of a polyolefin with a compatible thermoplastics and in which blend is disposed a silicone polymer.

2. A heat-shrinkable polyolefin film according to claim 1 which is a substantially homogeneous film comprising said polyolefin or blend having said silicone polymer dispersed throughout.

3. A heat shrinkable polyolefin film according to claim 1 which comprises a plurality of superimposed layers and wherein at least one of the layers providing a surface of the film comprises a polyolefin or a said blend having said silicone polymer dispersed therein.

4. A film according to claim 3 wherein both surface layers comprise a silicone polymer dispersion.

5. A film according to claim 3 or claim 4 which comprises a core layer interposed between surface layers providing said surfaces of said film, at least one of said surface layers having said silicone polymer dispersed therein.

6. A film according to claim 3, 4 or 5 wherein one surface layer incorporates a dispersion of said silicone polymer and the other surface layer is treated to improve ink adhesion.

7. A film according to any preceding claim in which, in said polyolefin or blend having said silicone polymer dispersed therein, the silicone polymer is present as a microdispersion of the silicone polymer in said polyolefin or blend.

8. A film according to any preceding claim wherein said silicone polymer is an ultra-high molecular weight silicone polymer.

9. A film according to any preceding claim wherein said blend having silicone polymer dispersed throughout is a blend of a polyolefin or polyolefin mixture with a slip additive comprising a compatible carrier thermoplastics incorporating a microdispersion of said silicone polymer.

10. A film according to claim 9 wherein said slip additive is Dow Corning masterbatch MB50-001.

11. A process for the manufacture of a heat-shrinkable polyolefin film comprising blending a polyolefin or polyolefin mixture with a masterbatch comprising a dispersion of a silicone polymer in a thermoplastics carrier incorporating a dispersion of a silicone polymer and supplying the resulting blend to an extruder.

12. A process according to claim 10, wherein said blend is co-extruded with a compatible plastics to form an extruded product comprising a plurality of layers and wherein said extruded product is formed into a film comprising a corresponding plurality of layers including at least one surface layer incorporating said dispersion of silicone polymer.

13. A plastics film comprising a plurality of layers and wherein at least one of the layers providing a respective surface of the film comprises a slip additive.
